Europäisches Patentamt

European Patent Office

Office européen des brevets

(19)

(11) Publication number: **0 041 362**
**A1**

# (12) EUROPEAN PATENT APPLICATION

(21) Application number: 81302347.0

(22) Date of filing: 27.05.81

(51) Int. Cl.³: **C 08 F 10/00**
**C 08 F 4/64, C 08 F 4/02**

(30) Priority: 02.06.80 US 155350

(43) Date of publication of application:
09.12.81 Bulletin 81/49

(84) Designated Contracting States:
BE CH DE FR GB IT LI NL

(71) Applicant: HERCULES INCORPORATED
910 Market Street
Wilmington Delaware 19899(US)

(72) Inventor: Long, Wendell Phillip
3503 Newport Gap Pike
Wilmington Delaware 19808(US)

(72) Inventor: Matlack, Albert Shelton
R.D. 1, Box 137
Hockessin Delaware, 19707(US)

(74) Representative: Brock, Peter William et al,
Michael Burnside & Partners 2 Serjeants' Inn Fleet
Street
London EC4Y 1HL(GB)

(54) 1-Olefin polymerization process and catalyst.

(57) In the polymerization of 1-olefins using a solid catalyst component composed of a titanium halide deposited on an essentially anhydrous magnesium halide support and an activator component composed of a trialkylaluminum and an alkyl ester of an aromatic carboxylic acid, the decay in activity of the catalyst is delayed by replacing a portion of the trialkylaluminum in the activator component with a dialkylaluminum alkoxide, providing a mole ratio of total aluminum to enter of from 5:1 to 15:1, and a mole ratio of trialkylaluminum to dialkyl aluminum alkoxide of from 1:5 to 6:1.

EP 0 041 362 A1

Croydon Printing Company Ltd.

1-OLEFIN POLYMERIZATION PROCESS AND CATALYST


This invention relates to the polymerization of 1-olefins using an improved catalyst. More particularly, it relates to an improved trialkylaluminum activator composition and the process of using it. This composition provides for less rapid decrease in the rate of polymerization when used as a catalyst component in the polymerization of 1-olefins. The productivity of the catalyst is correspondingly increased.

As is well known in the art, effective catalysts for the polymerization of 1-olefins are the Ziegler-Natta catalysts obtained by combining transition metal compounds of Groups IVb to VIb of the periodic table with organometallic compounds of Groups I to III of the table. It also is known that these catalysts can be made more effective by depositing the transition metal component on an inorganic compound as a support. Essentially anhydrous magnesium halides, $MgX_2$, wherein X is a chlorine or bromine atom, are preferred support materials. Nevertheless, the resulting catalysts have not been completely satisfactory due to the fact that their initially high activity decreases appreciably over a comparatively short period of time. The activity of the catalyst is said to decay.

Now, in accordance with this invention, there has been discovered an improvement in the process for the polymerization of 1-olefins in the presence of a solid catalyst component composed of a titanium halide deposited on an essentially anhydrous magnesium halide support and an activator component composed of a trialkylaluminum and a lower alkyl ester of an aromatic carboxylic acid, said ester containing from eight to twenty-six carbon atoms, the improvement comprising substituting a dialkylaluminum alkoxide for a portion of the trialkylaluminum in the activator, such substitution being made so as to provide a mole ratio of total aluminum to ester of from about 5:1 to about 15:1 and a mole ration of tralkylaluminum to dialkylaluminum alkoxide of from about 1:5 to about 6:1. The decay in activity of the catalyst is thereby considerably delayed. For example, the replacement, on a molar basis, of approximately one-half of the trialkylaluminum with a dialkylaluminum alkoxide in the activator composition has provided catalysts which continue to promote the polymerization of 1-olefins, at a rate which is 50% or more of the initial rate of polymerization, long after the rate obtained with the trialkylaluminum and ester alone has decreased to 20% or less of the initial rate.

Having generally described the embodiments of this invention, the following examples constitute specific illustrations thereof. All amounts are as given in the examples.

Example 1

Support Preparation

Under an atmosphere of argon throughout the reaction, a flask was charged with 30 mmols of diisoamyl ether (DIAE) and 60 mmols of dibutylmagnesium, and hexane was added to a total volume of approximately 120 ml. The flask was cooled to 20-65 °C. and 180 mmols of ethylaluminum dichloride was added dropwise over two hours with stirring at a speed of 250 r.p.m. The final volume was approximately 225 ml. The mixture was stirred an additional hour at -65°C., then allowed to warm to room temperature over one-half hour and stirred for another hour. The supernatant liquor was decanted, and the support was washed five times with 100-ml. portions of fresh hexane. The solid was resuspended in hexane to a total volume of about 150 ml. (Anal.: 0.36 $\underline{M}$ Mg; 0.085 $\underline{M}$ Al; 1.15 $\underline{M}$ Cl.)

Catalyst Preparation

Under an atmosphere of argon, the above slurry of magnesium chloride particles in hexane was treated with 47.4 mmols of DIAE (ratio of ether/Mg about 0.9) for one hour at room temperature. The liquor was decanted, and the solid was washed three times with 100-ml. portions of hexane; the solid was then resuspended in 150 ml. of fresh hexane. To this slurry, 1.44 mmols of ethyl benzoate was added, and the mixture was stirred at room temperature for one hour, following which 2.88 mmols TiCl$_4$ was added and the resulting mixture was stirred at 35°C. for another hour. An additional 47.4 mmols of DIAE was then added and the mixture was stirred another hour at 35 C. After decantation of liquid, the solid was washed three times with 100-ml. portions of hexane and resuspended to a volume of 360 ml. [Anal.: 0.0038 $\underline{M}$ Ti; 0.139 $\underline{M}$ Mg; 0.272 $\underline{M}$ Cl; 0.001 $\underline{M}$ Al, thus providing for 2.66 mol % Ti (based on Mg) and a Cl/Mg ratio of 1.95].

Polymerization of Propylene

Polymerization was conducted in a magnetically stirred vessel of 800 milliliters volume. The vessel was charged with 400 ml. of purified hexane, which was free of air and water, under argon. The vessel was then charged, at room temperature, with 0.13 mmol of triethylaluminum and 0.11 mmol of 1-phenyl-1-propanol, which were stirred together for ten minutes, following which 0.09 mmol of diethylaluminum chloride and 0.02 mmol of ethyl $\underline{p}$-anisate were added to the vessel at room temperature. The argon was replaced by propylene, and the solid catalyst was injected by syringe as a slurry in hexane. The amount of Ti provided by the catalyst was 0.00528 mmol, as calculated from analysis of the polypropylene product for p.p.m. Ti. After approximately five minutes, the temperature of the vessel was raised to 60°C., and the propylene pressure was increased to 3.72 bars. Two increments of triethylaluminum were then added (0.02 mmol at 17 minutes, 0.03 mmol at 41 minutes) to the reaction mixture to initiate the polymerization. Rate of monomer consumption was measured as a function of time. Over a period of 75 minutes, the rate of polymerization gradually dropped to 50% of the maximum rate measured initially at 60°C. and then held constant for an additional 99 minutes, at which point the polymerization was terminated. The rate in Zieglers (the number of grams of diluent-insoluble polypropylene product produced per millimole of titanium per atmosphere of propylene per hour) was 425. The mileage (the number of grams of the polypropylene product insoluble in the hexane solvent per millimole of titanium) was 3684 and the amount of diluent-insoluble product was 94.5%.

0041362

## Examples 2 to 4

Following generally the procedure of Example 1, polymerizations were carried out at 60°C. and 3.72 bars. propylene pressure using 0.36 mmol of triethylaluminum, 0.16 mmol of the indicated alcohol, 0.13 mmol of diethylaluminum chloride and 0.032 mmol of ethyl p-anisate. The alcohol in Example 2 was 1-phenyl-1-propanol, that in Example 3 was p-chlorobenzyl alcohol and that in Example 4 was 1,2-diphenylethanol. The additional information pertaining to these polymerizations is given in Table I. A control polymerization, run without the alcohol and dialkylaluminum halide additives, exhibited a rate of only 20% of the maximum initial rate of polymerization upon termination of the polymerization after 3.3 hours.

0041362

Table I

| Example No. | Time (hrs.) | Rate * (%) | Rate (Zieglers) | Mileage (g./mmol Ti) | Diluent Insolubles (%) | DHN Solubles** (%) | Bulk Density (g./cc.) |
|---|---|---|---|---|---|---|---|
| 2 | 3.6 | 60 | 1260 | 12000 | 84.7 | 12.0 | 0.32 |
| 3 | 3.1 | 67 | 1030 | 8400 | 80.1 | 13.5 | 0.32 |
| 4 | 3.3 | 60 | 1060 | 9200 | 83.3 | 14.4 | 0.24 |

\* The rate upon termination of the polymerization expressed as the percentage of the maximum initial rate, the latter usually occurring approximately ten minutes after the beginning of polymerization.

\** The percentage amount of the diluent-insoluble polymer which is soluble upon recrystallization of the polymer from decahydronaphthalene.

## Example 5

The general procedure of the preceding examples was used, except to omit the diethylaluminum chloride component of the activator composition. The polymerizations were made using 0.64 mmol of triethylaluminum, 0.10 mmol of ethyl p-toluate and 0.10, 0.15 and 0.20 mmol amounts of p-methylbenzyl alcohol. The results obtained are shown in Table II.

### Table II

| Amount of Alcohol (mmol) | Time (hrs.) | Time to Decay* to then 50% | to 25% | Rate (Zieglers) | Mileage (g./mmol Ti) | Diluent Insolubles (%) |
|---|---|---|---|---|---|---|
| 0.10 | 3.9 | 120 | 120 | 960 | 11000 | 95.0 |
| 0.15 | 3.9 | 90 | 140 | 1360 | 16000 | 95.5 |
| 0.20 | 3.3 | 60 | 140 | 1200 | 12000 | 96.3 |

*Time in minutes for the rate of polymerization to drop first to 50% of the initial rate and then to drop from 50% to 25% of the initial rate.

## Example 6

The procedure of Example 5 was essentially duplicated except to replace the p-methylbenzyloxide of that example with the alkoxides corresponding to the addition of 0.075 mmol of methanol, 0.15 mmol of ethanol and 0.10 mmol of t-amyl alcohol. The respective polymerizations were run for 4.2, 4.8 and 4.0 hours. The time to decay to 50% varied from 80 minutes to t-amyl alcohol to 175 minutes for ethanol.

The time to decay to 25% was an additional 180 minutes in the case of $\underline{t}$-amyl alcohol, and in the other two runs the rate of polymerization leveled off well above 25%. The rates (Zieglers), mileages and diluent insolubles were satisfactory in all runs.

The improved activator component of the Ziegler-Natta catalyst system used in the polymerization of 1-olefins in accordance with this invention is composed of a trialkylaluminum, a dialkylaluminum alkoxide and a lower alkyl ester of an aromatic carboxylic acid. Each of these is a necessary ingredient, and the amounts thereof are very important in obtaining the desired polypropylene products. The trialkylaluminum is necessary to provide the desired rate of polymerization, and the lower alkyl ester of an aromatic acid is needed to impart high diluent-insoluble content to the polymer, for example, polypropylene. As shown in some of the examples, the activator component also may contain a dialkylaluminum halide, such as diethylaluminum chloride, which alone is not effective as an activator when used with the magnesium halide-supported titanium halide catalyst component of this invention.

In general, the trialkylaluminums ($R_3Al$) used in accordance with this invention are those trialkylaluminums in which each alkyl group contains from two to ten carbon atoms. Representative compounds are triethylaluminum, tri-$\underline{n}$-propylaluminum, triisopropylaluminum, tri-$\underline{n}$-butylaluminum, triisobutylaluminum, tri-$\underline{n}$-hexylaluminum, triisohexylaluminum, tri-$\underline{n}$-decylaluminum and mixtures thereof.

The dialkylaluminum alkoxides ($R_2AlOCHR'R''$) used in the activator component in accordance with this invention are the alkoxide compounds corresponding to the trialkylaluminums. Exemplary compounds are diethylaluminum ethoxide and diethylaluminum benzyloxide. These compounds are prepared by reaction in a hydrocarbon solvent of any of the aforementioned trialkylaluminums with an alcohol having the general formula R'R''CHOH, wherein R' is a $C_1$-$C_4$ alkyl, phenyl, or a 2-substituted- or 2,4-substituted- phenyl, wherein the substituents are a $C_1$-$C_4$ alkyl, a $C_1$-$C_4$ alkoxy, or chlorine or bromine, and wherein R" is hydrogen, a $C_1$-$C_4$ alkyl, a $C_3$-$C_4$ cycloalkyl, benzyl or phenyl. The reaction involves replacement of one of the alkyl groups of the trialkylaluminum with an R'R"CHO-group. Representative of the alcohols of the above formula are methyl alcohol, ethyl alcohol, isopropyl alcohol, n-butyl alcohol, t-amyl alcohol, benzyl alcohol, p-chlorobenzyl alcohol, p-methylbenzyl alcohol, p-methoxybenzyl alcohol, 1-phenyl-1-propanol, 1-phenyl-1-butanol, 1-(o-methoxyphenyl)-1-ethanol, 1,2-diphenylethanol, cyclopropyl phenyl carbinol and diphenyl carbinol.

The alkoxides are readily identified based on the alcohols used in their preparation. For example, the alkoxide from triethylaluminum and 1-phenyl-1-propanol is diethyl-aluminum α-ethylbenzyloxide, the corresponding one from diphenyl carbinol is diethylaluminum α-phenylbenzyloxide, the one from p-chlorobenzyl alcohol is diethylaluminum p-chlorobenzyloxide and the one from ethanol is diethylaluminum ethoxide. The alkoxides may be prepared apart from or in the polymerization reactor but, in either instance, are used in the form of their hydrocarbon solutions. Mixtures of the alkoxides also may be used in accordance with this invention, and it is not necessary that the dialkylaluminum alkoxide correspond in the alkyl groups to the trialkylaluminum compound.

The dialkylaluminum halides ($R_2AlX$) which may also be included in the activator component in accordance with this invention are those monohalides corresponding to the trialkylaluminums, the halide being either a chloride or bromide. Representative compounds are diethylaluminum chloride, diethylaluminum bromide, di-n-butylaluminum chloride, diisobutylaluminum bromide, di-n-hexylaluminum bromide and di-n-decylaluminum chloride. Mixtures of these compounds may be used and, again, it is not necessary that the alkyl groups correspond to those in the trialkylaluminums.

The alkyl esters of aromatic carboxylic acids used in the activator component of this invention are those alkyl esters, preferably the lower alkyl $(C_1-C_4)$ esters, of aromatic carboxylic acids wherein the esters contain a total of eight to twenty-six carbon atoms, preferably eight to sixteen carbon atoms. Exemplary esters are methyl benzoate, ethyl benzoate, isobutyl benzoate, ethyl p-anisate, ethyl o-anisate, methyl p-toluate, ethyl p-toluate, methyl m-chlorobenzoate, methyl o-fluorobenzoate, ethyl p-decyl-benzoate, ethyl p-nonyloxybenzoate, ethyl p-hexadecyl-benzoate and mixtures thereof. The p-anisate and p-toluate esters are somewhat preferred to the benzoate esters in that the former generally provide a smaller amount of diluent soluble polymer in the polymer product.

The mole ratio of the alkylaluminums to the ester in the activator component used in accordance with this invention is important, and even more important is the mole ratio of the trialkylaluminum to the dialkylaluminum alkoxide. More specifically, the mole ratio of total aluminum $(R_3Al+R_2AlOCHR'R")+R_2AlX$ (if present) to ester should be in the range of from about 5:1 to about 15:1 to provide acceptable rates, mileages and diluent insolubles. However, the amount of $R_2AlX$, if present, should not exceed the amount of $R_2AlOCHR'R"$ on a molar basis, since this will effect an appreciable decrease in the amount of diluent insolubles. Moreover, although the mole ratio of $R_3Al$ to $R_2AlOCHR'R"$ may be in the range of from about 1:5 to about 6:1, the preferred range is from about 1:1 to about 6:1, especially when no $R_2AlX$ is present. Within the latter range, the best balance of high rates and mileages with a high diluent insolubles content is obtained.

Relative to the solid catalyst component which is used in accordance with this invention, it is composed of a titanium halide deposited on anhydrous, essentially magnesium halide support particles, and the preparation of a representative catalyst component has been shown in the examples. However, other methods of preparing the magnesium halide support particles may be used and are known in the art. Also known in the art are procedures for depositing the titanium halide on solid supports.

The titanium halides preferably used in accordance with this invention are, for example, titanium tetrachloride, methoxytitanium trichloride, titanium tetrabromide and titanium tetraiodide. More generally, the titanium halides may be characterized by the formula $TiX_n(OR)_{4-n}$, wherein R is a $C_1-C_{20}$ alkyl group, X is a chlorine, bromine or iodine atom and n is 1, 2, 3 or 4. Titanium tetrachloride is preferred. The amount of the tetravalent titanium halide added to the support is preferably such that the magnesium to titanium mole ratio is in the range of from about 200:1 to about 1:1, more preferably from about 80:1 to about 5:1.

In conjunction with depositing the titanium halide on the magnesium halide support, it may be desirable to treat the support particles with an electron donor, more specifically, an alkyl ester of an aromatic carboxylic acid wherein the ester contains a total of eight to twenty-six carbon atoms, as previously described. This particular group of electron donor compounds exhibits the effect of increasing the stereospecificity of the titanium halide in the production of polypropylene. However, excessive amounts of these esters have an adverse effect on the activity of the titanium catalyst, and the amount of the ester must be controlled in order that the titanium to ester mole ratio lies in the range of from about 0.5:1 to about 10:1, preferably from about 2:1 to about 4:1. Both the ester treatment of the support particles and the deposition of the titanium halide on the support may be carried out at a temperature of from about 0 to about 100°C., preferably from about 15 to about 60°C., for a period of from about 0.25 hour to about two hours. Following deposition of the titanium halide on the support, the support particles are washed with hydrocarbon.

After treatment with the titanium halide, the support particles also may be further treated with an electron donor, preferably an aliphatic ether containing four to twenty-four carbon atoms, such as diethyl ether, diisopropylether, dibutyl ether, diisoamyl ether, dihexyl ether and dioctyl ether. The amount of ether used may be from about 1:10 to about 5:1, preferably from about 1:5 to about 1:1, on a molar basis relative to the amount of magnesium present.

The ether treatment may be carried out at a temperature of from about 20 to about 50°C. for about 0.25 to about one hour. The supported catalyst particles are then thoroughly washed with hydrocarbon and resuspended in hydrocarbon for use in the polymerization of 1-olefins.

The hydrocarbons used in the processing steps shown in the examples may be $C_5$-$C_{16}$ aliphatic hydrocarbons, $C_5$-$C_{16}$ cycloaliphatic hydrocarbons, $C_6$-$C_{16}$ monocyclic aromatic hydrocarbons or mixtures of any of these hydrocarbons. The preferred hydrocarbons are the $C_5$-$C_{12}$ aliphatic hydrocarbons and the $C_6$-$C_{12}$ monocyclic aromatic hydrocarbons. Representative of the aliphatic hydrocarbons are pentane, hexane, heptane and octane. Representative of the cycloaliphatic hydrocarbons are cyclopentane and cyclohexane, and exemplary of the aromatic hydrocarbons are benzene, toluene and xylene.

The 1-olefins which may be polymerized in accordance with this invention are well known. In addition to the propylene shown in the examples, other representative olefins are ethylene, 1-butene, 4-methyl-pentene-1 and 1-hexene. Mixtures of the 1-olefins also may be utilized. The polymerization of these olefins is improved in accordance with this invention in that the activity of the catalyst does not decrease as rapidly or to as great an extent as it does when the activator component is composed only of a trialkylaluminum and an alkyl ester of an aromatic carboxylic acid.

By comparison, when the activator component is composed of a trialkylaluminum, a dialkylaluminum alkoxide and an alkyl ester of an aromatic carboxylic acid in the proportions previously described, the rate of polymerization drops off much more slowly than when the dialkylaluminum alkoxide is not present. Moreover, it is to be noted in some cases that the decrease in rate of polymerization was sufficiently delayed that the rate did not descend to the 25% level but instead tended to become essentially a continuing, level or slowly decreasing rate at as much as 50% to 70% of the initial rate. This is shown in Examples 1 to 4. Clearly, the improvement in accordance with this invention enables greater productivity of polymer product per unit of titanium catalyst.

CLAIMS:

1. A process for the polymerization of 1-olefins in the presence of a solid catalyst component composed of a titanium halide deposited on an essentially anhydrous magnesium halide support and an activator component comprising a trialkylaluminum and an alkyl ester of an aromatic carboxylic acid, said ester containing from 8 to 26 carbon atoms, characterized in that a portion of the trialkylaluminum in the activator, is replaced by a dialkylaluminum alkoxide to provide a mole ratio of total aluminum to ester of from 5:1 to 15:1 and a mole ratio of trialkylaluminum to dialkylaluminum alkoxide of from 1:5 to 6:1.

2. A process according to Claim 1 characterized in that the activator component additionally contains a dialkylaluminum halide in an amount which does not exceed the amount of the dialkylaluminum alkoxide on a molar basis.

3. A process according to Claim 1 or 2 characterized in that the mole ratio of trialkylaluminum to dialkylaluminum alkoxide is from 1:1 to 6:1.

4. A process according to any of Claims 1 to 3 characterized in that the trialkylaluminum is triethylaluminum and the dialkylaluminum alkoxide is diethylaluminum α-ethylbenzyloxide.

5. A process according to any of Claims 1 to 4 characterized in that the ester is ethyl benzoate, ethyl p-anisate, methyl p-toluate or ethyl p-toluate.

6. A catalyst for the polymerization of 1-olefins comprising a titanium halide deposited on an essentially anhydrous magnesium halide support and an activator component comprising a trialkylaluminum and an alkyl ester of an aromatic carboxylic acid, said ester containing from 8 to 26 carbon atoms, characterized in that a portion of the trialkylaluminum in the activator is replaced by a dialkylaluminum alkoxide to provide a mole ratio of total aluminum to ester of from 5:1 to 15:1 and a mole ratio of trialkylaluminum to dialkylaluminum alkoxide of from 1:5 to 6:1.

7. A catalyst according to Claim 6 characterized in that the activator component additionally contains a dialkylaluminum halide in an amount which does not exceed the amount of the dialkylaluminum alkoxide on a molar basis.

8. A catalyst according to Claim 6 or 7 characterized in that the mole ratio of trialkylaluminum to dialkylaluminum alkoxide is from 1:1 to 6:1.

9. A catalyst according to any of Claims 6 to 8 characterized in that the trialkylaluminum is triethylaluminum and the dialkylaluminum alkoxide is diethylaluminum $\alpha$-ethylbenzyloxide.

10. A catalyst according to any of Claims 6 to 9 characterized in that the ester is ethyl benzoate, ethyl p-anisate, methyl p-toluate or ethyl p-toluate.

**0041362**

European Patent Office

**EUROPEAN SEARCH REPORT**

Application number

EP 81 30 2347

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | FR - A - 2 416 903 (MONTEDISON)<br><br>* claims 1-4; page 4, lines 4-28; page 8, line 9 - page 9, line 22; pages 14 and 15, example 9 *<br><br>& GB - A - 2 014 592<br><br>-- | 1-10 | C 08 F 10/00<br>4/64<br>4/02 |
| X | BE - A - 857 574 (MONTEDISON)<br><br>* pages 27,28, example 31 *<br><br>-- | 1-10 | |
| | FR - A - 2 152 503 (MONSANTO)<br><br>* claims 1-6; page 2, line 14 - page 4, line 5, line 40 - page 5, line 17; page 7, lines 24-29 *<br><br>& GB - A - 1 374 164<br><br>-- | 1-10 | TECHNICAL FIELDS SEARCHED (Int. Cl.³)<br><br>C 08 F 10/00-<br>10/14<br>110/00-<br>110/14<br>210/00-<br>210/16<br>4/64<br>4/02 |
| | FR - A - 2 393 819 (N.N. SEVEROVA et al.)<br><br>* claims 1 and 2 *<br><br>-- | 1-3,8 | |
| | FR - A - 2 143 346 (MONTECATINI-EDISON)<br><br>* claims 1-13 *<br><br>& GB - A - 1 387 888<br><br>------ | 1,5 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | The present search report has been drawn up for all claims | | &: member of the same patent family, corresponding document |

| Place of search | Date of completion of the search | Examiner |
|---|---|---|
| The Hague | 10-09-1981 | WEBER |

EPO Form 1503.1  06.78